# EUROPEAN PATENT SPECIFICATION

(11) **EP 0 674 440 B1**
(45) Date of publication and mention of the grant of the patent: **19.05.1999**
(21) Application number: 95103794.4
(22) Date of filing: 16.03.1995
(51) Int. Cl.: H04N 7/167

(54) **A process for encryption and decryption of a bit stream containing digital information**
Verfahren zum Ver- und Entschlüsseln eines Bitstromes mit digitaler Information
Procédé de cryptage et de décryptage d'un train de bits contenant une information binaire

(30) Priority: 21.03.1994 FI 941316
(43) Date of publication of application: 27.09.1995
(73) Proprietor: NOKIA TECHNOLOGY GmbH, 75175 Pforzheim (DE)
(72) Inventor: Kangas, Mauri, SF-21530 Paimio (FI)

(56) References cited:
- EP-A- 0 582 122
- WO-A-94/10775
- IEEE TRANSACTIONS ON CONSUMER ELECTRONICS, vol. 38, no. 3, 1 August 1992, pages 188-194, XP000311835 ANGEBAUD D ET AL: "CONDITIONAL ACCESS MECHANISMS FOR ALL-DIGITAL BROADCAST SIGNALS"

## Description

The invention relates to a process for encryption and decryption of digital video, audio and data signals transmitted on a transmission path. In the process the video, audio and data information contained in the digital bit stream is first encrypted in an encryption device at the transmitting end, and then decrypted in the receiving device.

For the transmission of digital video, audio and data signals we can use transmission via air through a land based antenna, a satellite connection, a cable TV network, the telephone/telecommunications network, or an optical cable network, through which the information is transmitted to a plurality of receivers. Said information is often intended to be freely used by all receivers, but on the other hand also such methods are needed, by which it is possible to control which receiver/receivers actually can receive the information. Thus, in the transmission of an analog video signal in a pay TV system and in corresponding systems, the subscriber selects a program which she/he desires, and pays for those programs which are transmitted as encrypted signals. In the analog systems the encryption can be based on shuffling the order of the picture lines by blocks, which are smaller than the picture area. The subscriber has obtained an encryption key against payment. In advanced pay TV systems it is even possible to buy the rights to view an encrypted program a few moments before the transmission starts of even during the transmission. Then the subscriber in advance has loaded electronic money in a smart card for instance, and if there is a balance on the card, then the selected encrypted program is decrypted so that it can be viewed. It has also been proposed to use an arrangement in which a certain code stating the price of the program is attached to the transmitted program signal. The receiver compares the payment with the loaded money, and the program is decrypted when there is a sufficient balance.

The present encryption methods used mainly in pay TV applications are based on the encryption of an analog video signal. These methods cannot be directly applied to future digital systems, and they do not utilize the characteristics of digital transmission. The object of pay TV operators is an encryption process which in the receiver of a paying viewer produces picture and sound of good quality, which in other words must not corrupt the transmitted program. From the operators' point of view it is also favorable if it is possible to view the encrypted transmission to some degree without decryption. In this case the quality of the picture and the sound must be sufficiently good, so that the viewer can have an idea of this operator's programs, but on the other hand it must have a sufficiently bad quality, so that the program can not be viewed with pleasure. To an operator an encrypted transmission provides then a means to advertise the operator's programs to those viewers who are in the same network but who have not paid to receive the program in question.

A plurality of encryption methods are available when the transmitted information is in digital form and also contains something else than pure video information, as is assumed below. When we wish to control which receiver or receivers actually can receive the transmitted digital information, then there are basically two lines of action:
a) the digital information is transmitted according to a predetermined plan, whereby each receiver can express his/her desire to receive that information prior to the transmission or during it;
b) the digital information is transmitted only when any receiver expresses his/her desire to receive this information.

In the latter case also other than that individual who ordered can be allowed to receive this information, whereby these other receivers can already earlier have obtained the authorization to receive this transmission, or they can order it during the transmission. As it is desirable to prevent unauthorized receiving of the signal in such digital signal transmission, the transmitted bit stream is transformed into a form for which the receivers have no possibility to disentangle the data contents if they do not have the keys required for data decryption.

Generally there are many methods available for the encryption of a digital bit stream, and in order to make impossible an unauthorized attempt to decrypt the data when the system has been commissioned, it is desirable to have an encryption system which is as complicated and as secure as possible. One example of an encryption method suitable for a variable length code which converts the code of an input signal including variable length codes into a readable code having a length equal to that of an original code is described in EP 0 582 122 A1.

In order to maximize the security it is advisable to use a so-called block encryption algorithm whenever it is technically feasible. The algorithm will divide into blocks the data stream to be encrypted, which could comprise only a section of the total data stream. The block size could be e.g. 8 bytes, and the encryption is made in one operation for the whole block. In such cases where it is cumbersome to divide the data information into desired blocks, it is however possible to use a so-called PRBS generator (Pseudo-Random Bit Sequence), whereby the data section to be encrypted can have any number of bytes, even a precision of one bit could be achieved when needed. If we want to guarantee the algorithm's security against unauthorized decryption attempts it is advisable to combine two of the above-mentioned algorithms. Regarding the block encryption algorithm the most straightforward way is to keep within the limits imposed by the block size.

The transmission of an audio signal is an essential part of the transmission of a digital signal, but also so called control data has to be transmitted when systems are realized. In the future it is also necessary to transmit so called data information in order to have more versatile services, whereby the data information can contain almost any kind of information from the system's point of view. All these information sections must be transmitted in encrypted form, at least partly, in order to secure that only authorized receivers can receive the information.

Future digital television systems enable simultaneous transmission of several programs in one transmission channel. Then the transmitted signal is in packet form, and the transmission channel sequentially transports packets containing audio and video information of these different programs. One video packet usually contains information of several picture blocks, whereby one picture block can comprise e.g. 8x8 pixels, or the video data packet can contain picture information of so called macro blocks, comprising 16x16 pixels. It is also possible to transmit data packets which are attached to the programs. MPEG-2 (Motion Picture Experts Group) is a generic standard of high quality video compression methods, with which a television picture can be transmitted in fewer bits than when the television picture is digitized directly into bits.

Several compression standards have been developed in order to transmit video, audio and data signals, the above mentioned MPEG-2 (Motion Picture Experts Group) being one of these. This standard was developed in a joint work group of ISO (International Standards Organization) and IEC (International Electrotechnical Commission). Several MEPG standards have been developed, and in future the transmission of the above mentioned information will be realized in many different applications, according to the specifications defined by these standards. Concerning the standards we refer to the MPEG standard ISO/IEC 13818 known by persons skilled in the art. According to this standard the encoded video, audio and data information is packed into so called PES packets (Packetized Elementary Stream). The packet will contain a header, and data section and the whole packet may have varying lengths.

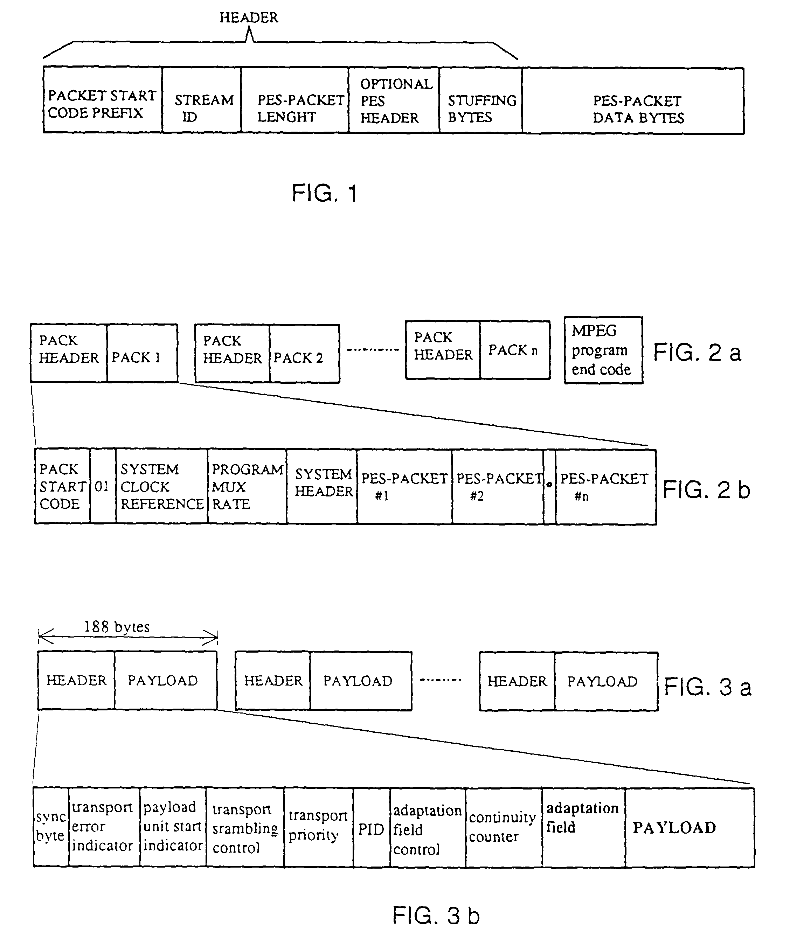

Figure 1 shows the structure of a PES packet. The packet header comprises the packet start code prefix, the stream ID, an indication of the packet length, an optional header, and a plurality of stuffing bytes. Then there is an information section containing the data bytes of the packet, and as was mentioned above, the information section may comprise a block of the program's encoded audio, video or data signals, but so that one packet contains a signal of one type only. The packet can have a length of several kilobytes.

The MPEG standard defines two bit streams of different types: 1) the Program Stream, and 2) the Transport Stream. The program stream contains the encoded video and audio signal in the form of PES packets (Packetized Elementary Stream) referred to above, each of these packets always containing a bit stream block of a certain size, in other words so that the video, audio and data signal of the program source is encoded separately and sliced into blocks of a certain length, each block being placed in the information section of the PES packet. The length of a block and thus the length of the PES packet may vary. Thus the program's video signal comprises sequential video-PES packets, the audio signal comprises sequential audio-PES packets, and so on. For instance all information of a motion picture may be stored as a program stream.

Figures 2a and 2b show how the PES packets of figure 1 are placed as packets in the program stream. The program stream, figure 2a, comprises sequential packets having a packet header and an information section PACK. Figure 2b showing the structure of one packet in the program stream, the so called packet level, illustrates how a program stream packet PACK contains several PES packets, which are numbered #1, #2, ..., #n, and which may contain picture, sound, data etc. relating to the program. For the sake of clarity we can consider that the packet sequence of figure 2a represents e.g. one motion picture, the PES packetized audio and video signals of which are placed in the information sections of the program stream packets. The program stream ends in the "program end code".

When a program shall be transmitted on a transmission link, then a so called transport stream is formed, which is intended for the transmission of audio and video signals on any transmission link, such as TV broadcasts, satellite, cable TV, telephone/telecommunications cables, optical cables, etc. If the program source is a recording in the form of a program stream, e.g. a motion picture recorded on a CD disk, the program stream is first demultiplexed into separate audio, video and data PES packets. On the other hand, if the program source provides audio, video and data signals, then these are decoded and formed into PES packets. Whatever the source may be, the PES packets provided by the source are placed into the transport stream.

Figures 3a and 3b show the structure of the transport stream. The transport stream is such that it comprises transport stream packets having a fixed length of e.g. 188 bytes, figure 3a. A packet comprises a header of varying length, and a data section containing the useful information or payload. Figure 3b shows the structure of one transport stream packet. The packet header comprises 9 fields, which will not be described in more detail here. Here we must observe the last field or the adaptation field, which plays an important role, as is described later. The PES packet bytes are included in the packet payload.

Let us consider how the PES packets of figure 1 are placed in the transport stream packet of figure 3b. After the transport stream packet header there is first the PES packet header, which indicates the start of a new PES packet. Then the payload section is filled with PES packet bytes starting at the beginning of the packet. Then the operation moves to fill the next payload section with PES packet bytes. This is continued until the last PES packet bytes are placed in the last transport stream packet. If there are less bytes than the place reserved for the actual payload, then the header adaptation part is filled with as many stuffing bits as are necessary to obtain the standard length of the transport stream packet. After the header of the next transport stream packet there is the header of the next PES packet, and after this the payload section where the bytes of this next PES packet are placed. Then the operation continues to the next transport stream packet and filling its payload section, an so on. Here it must be observed that the border of two PES packets divided into the transport stream is never inside a transport stream packet, but a new PES packet always starts after the header of the transport stream packet, and the packet is ended so that its last bytes at the same time form the last bytes of a transport stream packet.

In must be noted here that the longest PES packet could be several kilobytes, and thus several times longer than a transport stream packet of the fixed length (188 bytes). Thus the transport stream packets, figure 3, comprise PES packet sections of varying lengths. Because the PES packets contained in a program stream are divided rather straightforwardly into the packets of the frequency stream, one PES packet contained in the program stream is divided into very many transport stream packets.

Depending on the application the digital bit stream may exist either as a program stream or a transport stream, or also in a form where the PES packets contained in the program stream are independent entities. Video and audio signals have their own PES packets, whereby a program stream packet contains a varying number of packets in varying locations within the program stream. Because there may arise situations in which, on the other hand, the digital information should be processed as a program stream, as PES packets, or as a transport stream, and in which on the other hand it is desirable to encrypt the bit streams in the form they happen to have in the respective application, then it is reasonable to be able to encrypt the bit streams on all respective levels. Then the encryption should have at least two alternatives:
1) encryption on the transport stream level, and
2) encryption on the PES level.

Because the transport stream level is the more common means to transmit and process data, it is reasonable that the encryption is as secure as possible at least on this level. Because the transport stream is divided into packets of fixed lengths, as was stated above, it is logical to have the data stream encryption on the transport stream level made as an operation which concerns single packets.

Because the length of the section to be encrypted contained in the packets in the transport stream may vary, it is not possible to have a block encryption to encrypt directly the whole section to be encrypted, as its length very seldom comprises a multiple of the encryption block. Therefore prior art systems use as the encryption algorithm for the transport stream a combination of block encryption and a PRBS generator, with which it is possible to obtain a sufficient encryption security. By using a combination of these two algorithms it is possible to overcome the block size limitation imposed by the block encryption, because an encryption multiple remainder can be encrypted only by the PRBS generator which can provide an accuracy of one byte regarding the length of the section to be encrypted.

In the encryption on the program stream level or on the PES level the prior art systems will process packets of varying lengths which comprise sections to be encrypted of correspondingly varying lengths. When the program stream or the individual PES packets are directed into the transport stream, then the PES packets have to be sliced pieces suitable for the transport stream. This presents at least the following problems: If the PES packet was encrypted on the program stream level or on the PES level, then during the encryption process it is not possible to know, expect in special cases, the sizes of the blocks into which the PES packet will be sliced. If block encryption is used for the entire PES packet, then the slicing operation most often will lead to a situation where the slicing will happen at a place within the encryption block, so that the encryption block is separated in two transport stream blocks. This in turn will lead to a complicated structure in the decryption device, because sequential packets or at least packet sections must be stored there in the internal memory in order to finish the decryption process. On the other hand it is desirable to use this decryption device to decrypt several sequential data streams, and on the other hand the sequential packets of the same data stream will not be sequential in the transport stream. This will in turn lead to a situation in which the sequential packets or sections of these packets must be temporarily stored in memory in order to decrypt all packets in the transport stream. If the decryption device is realized according to this principle it will be unnecessarily complicated.

In order to avoid the above mentioned problems the following requirements must be satisfied when the data stream encryption is realized according to the MPEG standard:
- It must be possible to encrypt the data stream on the program stream level and the transport stream level as well as on the PES packet level.
- The encryption must by as secure as possible.
- The decryption must be realized as simply as possible within the limits set by the basic algorithms.

The object of the process to use the encryption algorithms according to the patent claims is to satisfy all the requirements presented above. The process to use the encryption algorithms does not actually take a stand on the actual algorithms, but of course we select algorithms which are as secure as possible and which shuffle the bit stream as effectively as possible.

According to the basic idea of the invention we use two different encryption algorithms simultaneously, but on different levels according to the MPEG standard. One algorithm performs block encryption on one level, whereby the whole section to be encrypted must be a multiple of the block length. Accordingly the second algorithm performs the encryption on a second level with an accuracy of one byte, even one bit, using the PRBS algorithm. Below in the text we call this latter encryption method byte encryption. When necessary we use the abbreviation TS for the transport stream. In addition to the basic method, which comprises simultaneous use of block encryption and byte encryption, the invention comprises several embodiments to perform the encryption.

According to the first embodiment the encryption is made on the PES level by using byte encryption, and on the TS level there is no encryption. According to the second embodiment there is no encryption on the PES level, but on the TS level there is performed either a block encryption with an accuracy of a block or a partly double encryption, which also comprises bytes outside the encryption block multiple.

According to the third embodiment byte encryption is made on the PES level, and on the TS level there is performed block encryption with an accuracy of the block size or a partly double encryption comprising also the bytes outside of the block size multiple.

The different embodiments of the invention are described below with reference to the enclosed schematic figures, in which:
figure 1 shows a PES packet according to the MPEG-2 standard;
figure 2 shows the principle of the program stream;
figures 3a and 3b show the principle of the transport stream;
figure 4 shows the encryption according to the first embodiment;
figure 5 shows the encryption according to the second embodiment;
figure 6 shows a chained block encryption of the TS packet;
figure 7 shows the decryption of the chained block encryption of the TS packet;
figure 8 shows a direct block encryption of the TS packet;
figure 9 shows the decryption of the direct block encryption of the TS packet;
figure 10 shows the encryption according to the third embodiment;
figure 11 shows a combined byte encryption and block encryption;
figure 12 shows the decryption of the encryption according to figure 11; and
figure 13 illustrates how the block encryption and the byte encryption is made in the same process.

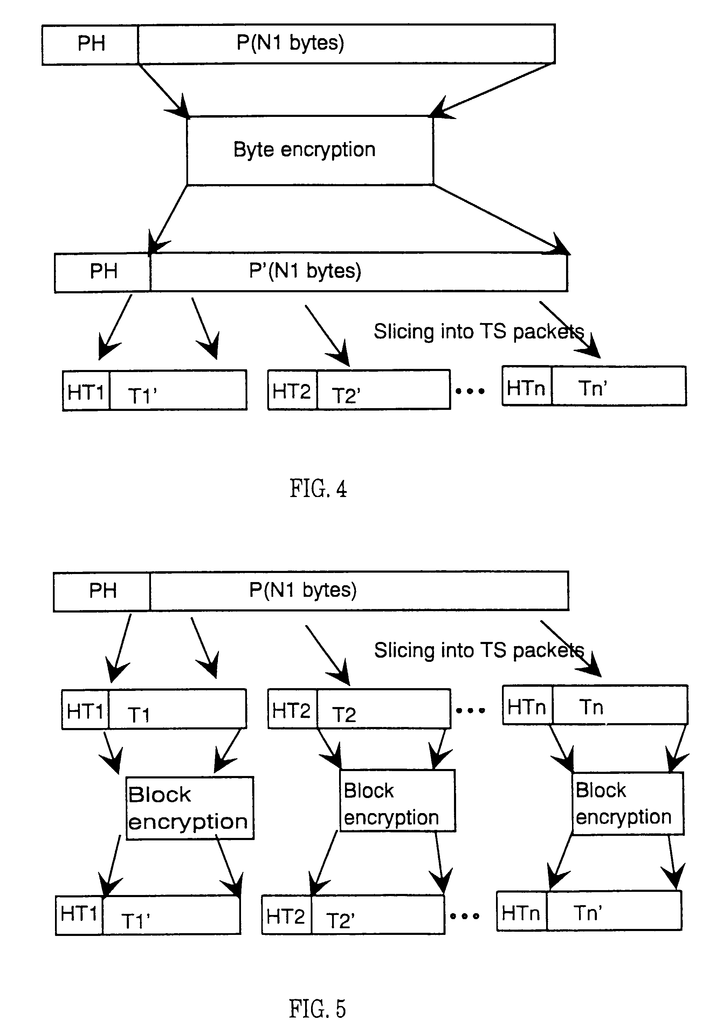

Figure 4 shows how the encryption is made according to the first embodiment. The encryption is made on the PES level using byte encryption, i.e. a PRBS generator is used. The PES packet to be encrypted comprises a header PH, after which there is the information section P(N1) comprising N1 bytes. Here it should be observed that both the header length and the information section length, and thus the total packet length can vary within certain limits. The byte encryption is made only on the information section, and there is no reason to encrypt the header, because the decryption is made easier when the header is not encrypted. After the byte encryption the original PES packet has transformed into a packet comprising the original header PH and the information section P' (N1) which was transformed by the encryption algorithm and comprises N1 bytes, whereby all bytes of the information section were encrypted regardless of the lengths of the PES packet or the header section.

Then the encrypted PES packets can be sliced and placed in the TS packets of a standard length, if required by the application. The slicing is made so that after the header HT1 of the first TS packet there is immediately the header PH of the PES packet, and immediately after that so many encrypted bytes of the section P'(N1) are placed in the information section T1' that the TS packet is filled. After the header HT2 of the next TS packet the process to fill the information section T2' with encrypted bytes is continued. In the last TS packet the situation is most often such that the there are less encrypted bytes of the PES packet than the length of the information section Tn' would allow. The packet is made into the standard length by increasing the length of the header HTn. This is made so that the required number of stuffing bytes are added to the adaptation field of the header. TS packets generated in this way will not be further encrypted.

The embodiment of figure 5 differs from that of figure 4 in that no encryption is made on the PES level, but block encryption is made on the TS level. The encryption is made with an accuracy of the block size, or alternatively it is made as a partly double encryption, whereby bytes of a packet outside the encryption block multiple can be encrypted. According to figure 5 the PES packet formed by the header HP and the information section P(N1) comprising N1 bytes is sliced without encryption into n TS packets, whereby each TS packet comprises a header (HT1... Htn) and an information section (T1...Tn), in which the N1 bytes of the PES packet are placed. The TS packets are made equally long by adding stuffing bytes in the header when required. Then a block encryption is made on the TS packets, either on the multiple of the encryption block or on the whole section to be encrypted. The header blocks HT1 - Htn have varying lengths and do not belong to the region which is encrypted. But the remaining bytes belong to the region T1 - Tn to be encrypted, which after encryption will be in the form T1' - Tn', and each byte of these packets will be encrypted regardless of the length of the header section, if the encryption is partly made as double encryption, whereby also bytes outside the block multiple can be encrypted. A part of the bytes will not be encrypted, if the encryption is made only with an accuracy of the block size. This is due to the fact that the information part of each TS packet is not necessarily a multiple of the encryption block. It is to be noted that the TS packet as a whole has a fixed length, but the header may have a varying length.

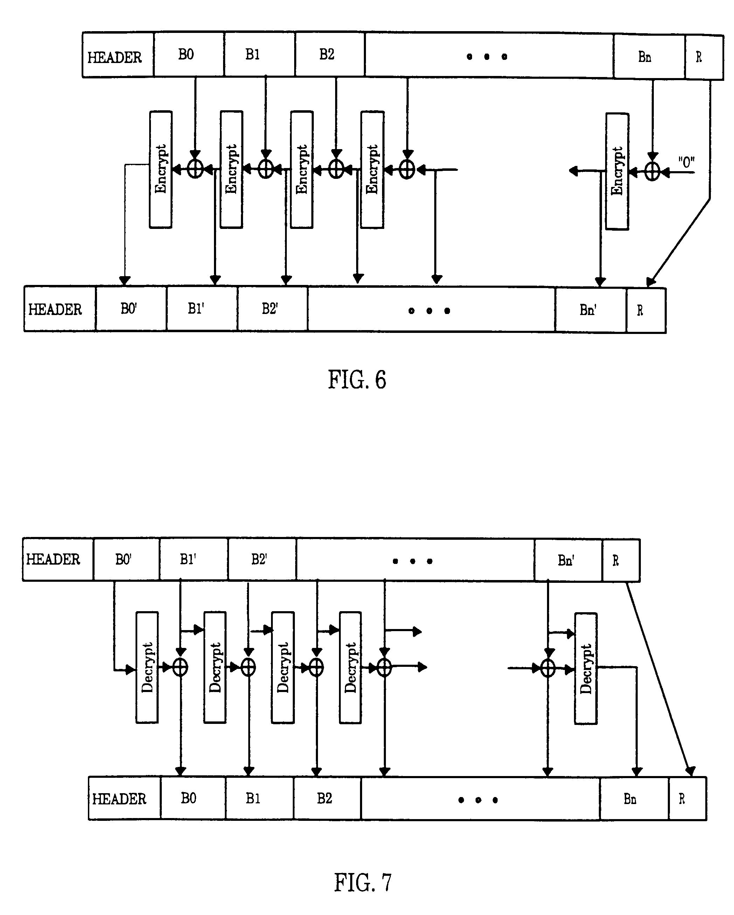

In the following we consider different means to make the block encryption. Figure 6 shows the functional principle of a so called chained block encryption. The section to be encrypted of the TS packet is divided in blocks B0 - Bn having a size of the encryption block, whereby the remainder R is shorter than the encryption block. The encryption device processes a whole TS packet at a time, and the encryption is started from the end, so that first the block Bn is encrypted by block encryption. The part 'Encrypt' performing the encryption generates an encrypted block Bn'. All block encryptors use a certain key to perform the block encryption, and for the sake of simplicity the key may be the same for all block encryptors. The remainder R will be moved without encryption to its own place in the encrypted TS packet. Bn' is moved through the XOR function of the block Bn-1, and thus the block encryption of block Bn-1 has as input Bn' XOR Bn-1. When we in the figure move towards the beginning of the TS packet's block to be encrypted, we will notice that the same operation is repeated for each block until we reach the beginning of the section to be encrypted. The header section HEADER is moved as such to the beginning of the encrypted TS packet.

Figure 7 shows correspondingly how the encryption of figure 6 is decrypted, whereby the first encrypted block B0' is decrypted in the decryption block 'Decrypt', and an XOR operation is performed on the result and the encrypted block B1', which at the same time produces the decrypted block B0. This result B0 is at the same time the input of the next block decryptor. Correspondingly we move block by block until we reach the end of the encrypted section of the TS packet. The remainder R was not encrypted originally, so it is already decrypted.

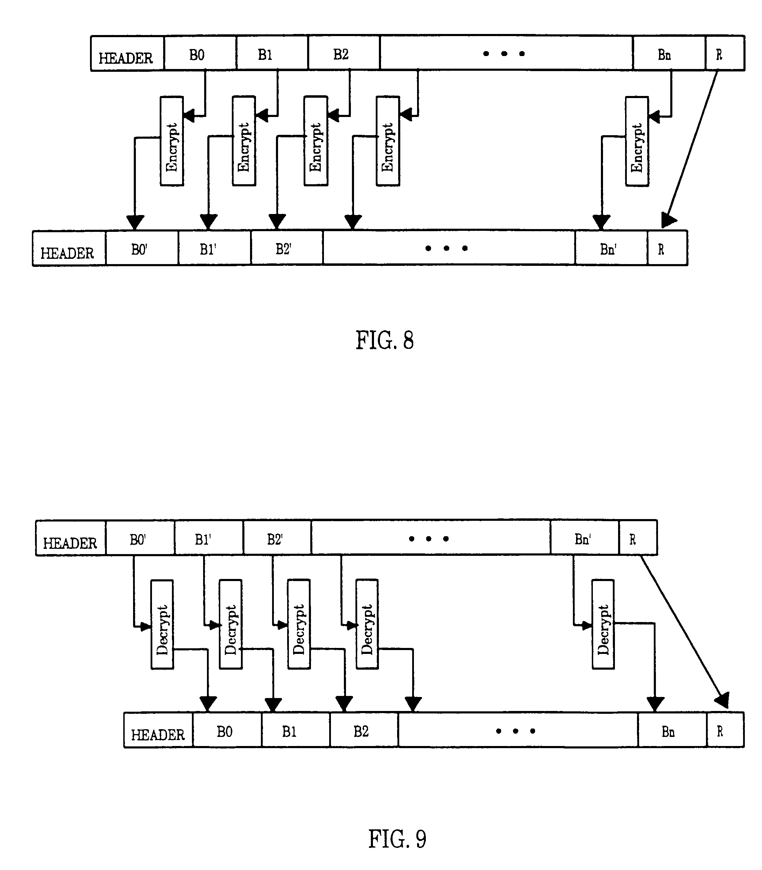

Figure 8 shows a so called unchained version of the block encryption in figure 6. In this version all blocks B0...Bn of the TS packet are encrypted separately, and it is not necessary to start the encryption from the end of the TS packet, but the encryption can be performed separately on each block. Starting from the beginning each block B to be encrypted is directed to the input of the encryption block 'Encrypt', and then we obtain an encrypted block B', which is placed in the encrypted TS packet at the same place as the not encrypted block B. The remainder R is not encrypted.

Figure 9 shows the decryption of the encryption made by the method according to figure 8. The decryption is made in a way which is as straightforward as the encryption. In turn each encrypted block B0'...Bn' is directed, starting from the beginning of the packet or from the block B0', to the input of the decryption block 'Decrypt', which at its output provides the original decrypted block B0...Bn, which is placed in the TS packet at the place of the corresponding encrypted block B'. The remainder R as such is placed directly to its place.

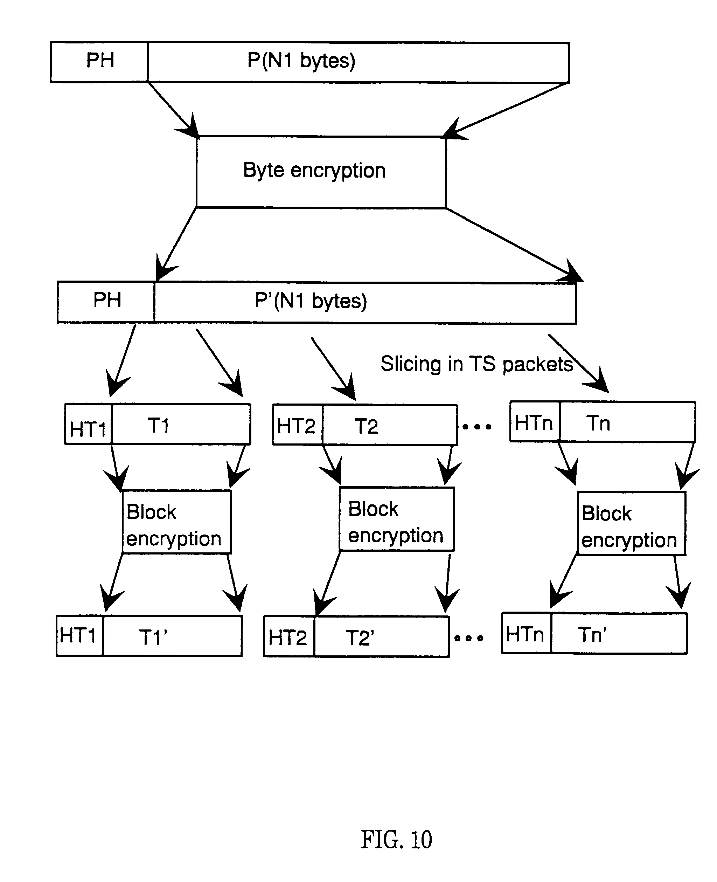

The third embodiment of the invention according to figure 10 performs the encryption both on the PES level, where byte encryption is performed, and on the TS level, where block encryption is performed with an accuracy of the block size or alternatively partly doubled encryption is performed, which also incorporates the bytes outside the multiple of the encryption block. The encryption according to this embodiment is thus a combination of the encryption methods of the embodiments 1 and 2. Thus we first perform a byte encryption on the PES packet PH+P(N1), and the PES packet PH+P'(N1) containing the encrypted bytes is sliced into TS packets. In this way we obtain on the PES level encrypted TS packets, the sections of which now will be encrypted were already encrypted on the PES level. Then we perform the same operations as in figure 5 on the TS packets already encrypted on the PES level. All bytes of the TS packet's section to be encrypted are encrypted irrespective of whether the operation is according to the block size or a partly doubled encryption.

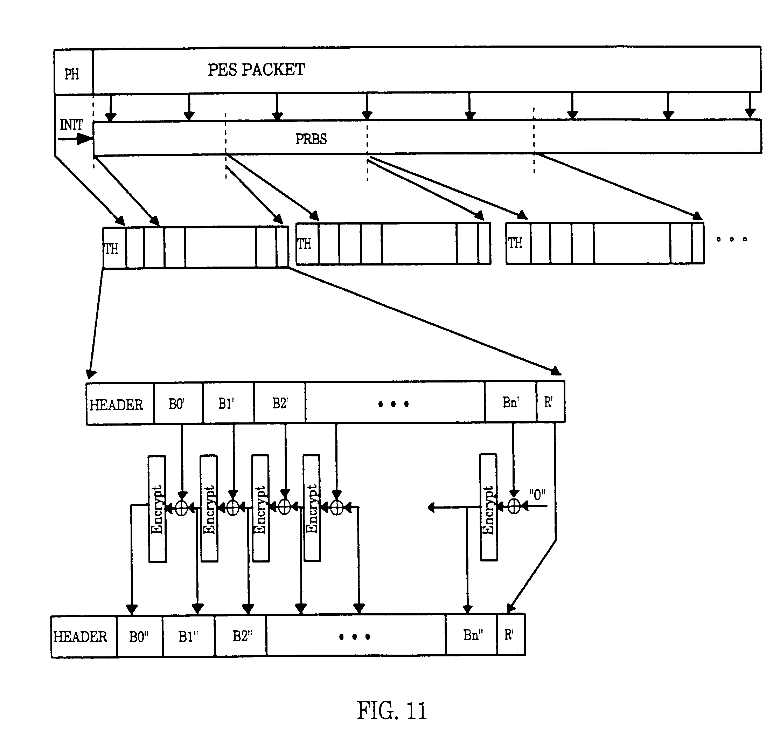

Figure 11 shows a practical way to realize the third embodiment shown in figure 10. The processing is first made on a whole PES packet of the program stream which is byte encrypted by the PRBS algorithm or a corresponding algorithm. The PRBS block means that at the input of the PRBS block there is an XOR operation on the number generated by the block itself. At the beginning of the PES packet the PRBS algorithm is initialized with an INIT initializing number, and then the PES packet is processed byte by byte, proceeding to the end of the whole PES packet. The initialization is made utilizing an encryption key in one way or another. Then the PES packet is sliced into TS packets for the transport stream, each TS packet getting its own header HT. If the combined length of the headers of the TS packet and the PES packet exceeds the last part of the TS packet, then after the first TS packet header and possibly also after the second TS packet header there is further included also PES packet header information, so that all those bytes which are outside the TS packet header do not belong to the region to be encrypted. In any case the PES packet encrypted with the PRBS algorithm is sliced into TS packets so that a plurality of TS packets are obtained from one PES packet, each TS packet having a header, several encrypted blocks B0' - Bn', and an encrypted remainder R'. These TS packets are then encrypted according to the chained encryption of figure 6, whereby the result is a plurality of encrypted blocks B0'' - Bn'' and an encrypted remainder R'.

The keys are transmitted from the encrypting device to the decrypting device in the digital bit stream, and the transport messages of the keys are encrypted by their own algorithms. All 'Encrypt' and 'Decrypt' blocks usually use the same key. This same key is also used in the initialization (INIT) of the PRBS block. Even if the same keys are used in both the block encryption and the byte encryption according to figures 10 and 11 when the combined block and byte encryption is performed, there are four possibilities to use the encryption keys:
1. The byte encryptor uses the same key as the block encryptor;
2. The byte encryptor and the block encryptor use different keys;
3. The blocks of the block encryptor have the same keys available; and
4. The blocks of the block encryptor can use different keys for all blocks, if this is considered necessary.
The operator can select which option to use, based on his/her own requirements.

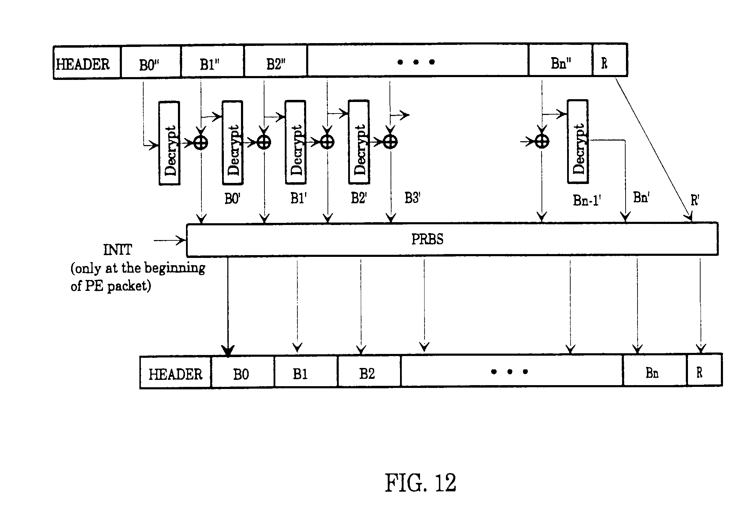

Figure 12 shows the decryption of the encryption according to figure 11. The TS packets are first decrypted as is shown in figure 7. As a result we obtain blocks which are still encrypted by the byte encryption. Therefore each block B0' - Bn' and the remainder R' encrypted by the PRBS algorithm are further decrypted according to the PRBS algorithm so that we obtain the original TS packet. The initialization of the PRBS packet is made only at the beginning of the PES packet.

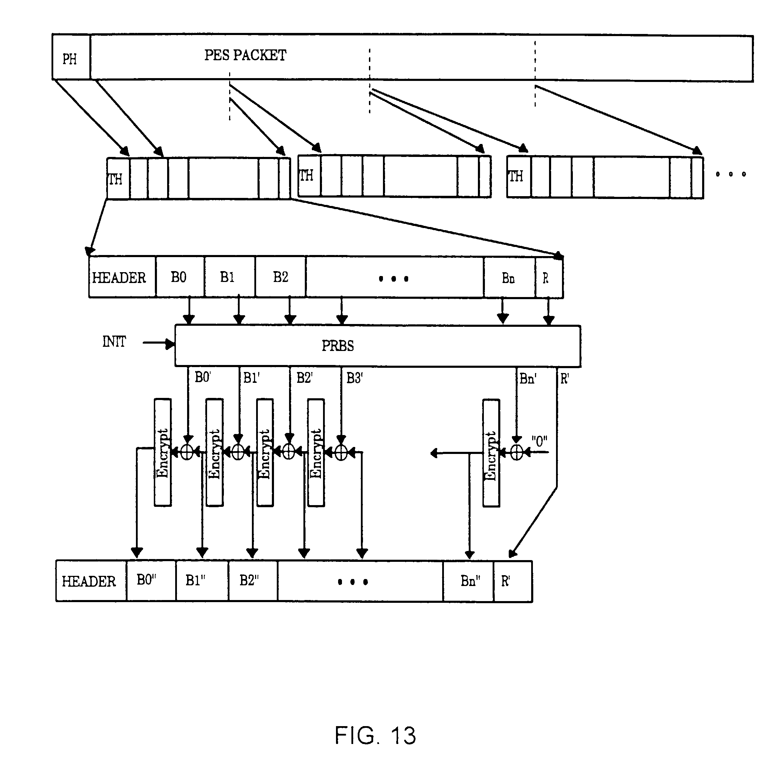

Figures 10 and 11 show how the encryption is made first on the PES packet, which then is sliced into TS packets, and finally the TS packets are also encrypted by block encryption. These two encryptions can be performed in one process shown in figure 13. According to this process the PES packets are first sliced into TS packets in the way described above. Then both the byte encryption and the block encryption are performed in one process. The advantage of this arrangement is that, if required, the encryption can be made at the same time in the encryption device. The initialization of the PRBS algorithm, which utilizes an encryption key, is made at the beginning of the PES packet. The PRBS block means that in the input of the PRBS block there is an XOR operation on the number generated by the block itself. The data stream encrypted according to figure 13 can be decrypted in the way shown in figure 12.

When the encryption is made on the TS level we can select whether to encrypt all bytes outside the TS packet header, or to leave also the header of the PES packet outside the TS packet encryption. It is preferred to not encrypt the headers of the PES packet and the TS packet. Then the encrypted packet can be easily processed in the encrypted form, without having an intermediate decryption of the packets.

Figures 6 to 9 and 11 to 13 show the blocks 'Encrypt' and 'Decrypt' of the block encryption and the block 'PRBS' of the byte encryption. It must be noticed that block encryption keys and byte encryption keys are essential to these operations. All 'Encrypt' and 'Decrypt' blocks usually use the same key. This same key is also used when the PRBS block is initialized (INIT). The keys are transmitted from the encrypting device to the decrypting device within the digital bit stream, and the transport messages of the keys are encrypted by their own algorithms.

According to the basic idea of the invention the encryption is made either on the PES packet level, on the TS packet level, or on both levels. The decryption made in the receiver is the inverse process to the encryption, and according to the above a person skilled in the art can realize it in a clear-cut manner. From certain bits in the header of the TS packet the decryption device in the receiver will know on which level the decryption is made and which encryption method is used, and then it can select the correct decryption algorithm. Because the header of the PES packet follows the header of the TS packet this header can also contain the information about the encryption method if the encryption is made only on the PES level. A practical advantage of the invention is that all different encryption methods can be realized by he same device arrangements both in the receiver and in the transmitter. Although the byte encryption and the block encryption are different and require their own circuits arrangements, with suitable arrangements the circuit can be made to operate according to either encryption method or as a combination of these. When the encryption according to the third embodiment is decrypted the block decryption and byte decryption is made on the TS packets already before they are decomposed into PES packets. The encryption method according to the first embodiment of the invention can be used in such applications where only PES packets are available at the transmitting end, but the transmission should be encrypted in any case.

## Claims

1. A process for encryption of a bit stream containing digital video or digital audio or data information, whereby the bit stream is formed by arranging each information into first (PES) packets comprising a first (PES) header and a first information section formed by information bytes, whereby for transmission each (PES) packet is divided into second transport stream (TS) packets of a fixed length, comprising a second (TS) header and a second information section formed by a fixed first number of information bytes, whereby a second smaller number of bytes form an encryption block and each second information section contains several encryption blocks, **characterized** in that
- in the encryption of the (PES) packets a first encryption key is used in a bit or byte based encryption algorithm, whereby the encryption is made with an accuracy of one bit or one byte at a time, and
- in the encryption of transport stream (TS) packets a second encryption key is used in a byte based encryption algorithm, whereby the encryption of the section to be encrypted is made by blocks and
- that information about how the (PES) packets and the transport stream (TS) packets are encrypted is included in the transport stream (TS) packet header, and
- that the transport stream (TS) packet header is not encrypted.

2. The process of claim 1, **characterized** in that the block encryption of the transport stream (TS)packets is performed only on that section of the packet to be encrypted which has a length of the encryption block multiple.

3. The process of claim 1, **characterized** in that the block based encryption algorithm is used over the whole section to be encrypted, so that first a number of bytes corresponding to a multiple of the encryption block is encrypted, and that during a second encryption phase a multiple of the encryption block is formed by performing the encryption also both on bytes of a section shorter than the block length and on a desired number of bytes of the section already once encrypted.

4. The process of claim 1, 2 or 3, **characterized** in that the (PES) packet encryption algorithm does not limit the length of the section to be encrypted, but that it can be of any length with an accuracy of a byte or a bit.

5. The process of claim 4, **characterized** in that the (PES) packet encryption algorithm is a PRBS algorithm (Pseudo Random Bit Sequence).

6. The process of claims 1 to 5, **characterized** in that the (PES) packet header is not encrypted.

7. The process of claims 1 to 6, **characterized** in that the first and second encryption keys are the same.

8. A process for decryption of a bit stream containing digital video or digital audio or data information, whereby the bit stream is formed by arranging each information into first (PES) packets comprising a first (PES) header and a first information section formed by information bytes, whereby for transmission each (PES) packet is divided into second transport stream (TS) packets of a fixed length, comprising a second (TS) header and a second information section formed by a fixed first number of information bytes, whereby a second smaller number of bytes form a decryption block and each second information section contains several decryption blocks, **characterized** in that
- information about how the (PES) packets and the transport stream (TS) packets are encrypted is read from the transport stream (TS) packet header, which is not encrypted.
- in the decryption of transport stream (TS) packets a first decryption key is used in a byte based encryption algorithm, whereby the decryption of the section to be decrypted is made by blocks and
- in the decryption of the (PES) packets a second decryption key is used in a bit or byte based decryption algorithm, whereby the decryption is made with an accuracy of one bit or one byte at a time.

9. The process of claim 8, **characterized** in that when it is identified from the transport stream (TS) header that the block based encryption algorithm is used over the whole section to be decrypted, first a number of bytes corresponding to a multiple of the decryption block is decrypted, and during a second decryption phase a multiple of the decryption block is formed by performing the decryption also both on bytes of a section shorter than the block length and on a desired number of bytes of the section already once decrypted.

10. A device for encryption of a bit stream containing digital video or digital audio or data information, comprising means for forming the bit stream by arranging each information into first (PES) packets comprising a first (PES) header and a first information section formed by information bytes, means for slicing each (PES) packet for transmission into second transport stream (TS) packets of a fixed length, comprising a second (TS) header and a second information section formed by a fixed first number of information bytes, whereby a second smaller number of bytes form an encryption block and each second information section contains several encryption blocks, **characterized** in that it further comprises
- means for the encryption of the (PES) packets using a first encryption key in a bit or byte based encryption algorithm, whereby the encryption is made with an accuracy of one bit or one byte at a time, and
- means for the encryption of transport stream (TS) packets using a second encryption key in a byte based encryption algorithm, whereby the encryption of the section to be encrypted is made by blocks and
- means for providing information about how the (PES) packets and the transport stream (TS) packets are encrypted to be included in the transport stream (TS) packet header.

11. A device for decryption of a bit stream containing digital video or digital audio or data information, whereby the bit stream is formed by arranging each information into first (PES) packets comprising a first (PES) header and a first information section formed by information bytes, whereby for transmission each (PES) packet is divided into second transport stream (TS) packets of a fixed length, comprising a second (TS) header and a second information section formed by a fixed first number of information bytes, whereby a second smaller number of bytes form a decryption block and each second information section contains several decryption blocks, **characterized** in that it comprises
- means for reading from the transport stream (TS) packet header information about how the (PES) packets and the transport stream (TS) packets are encrypted,
- means for the decryption of transport stream (TS) packets by using a first decryption key in a byte based encryption algorithm, whereby the decryption of the section to be decrypted is made by blocks and
- means for the decryption of the (PES) packets by using a second decryption key in a bit or byte based decryption algorithm, whereby the decryption is made with an accuracy of one bit or one byte at a time.

12. The device of claim 11, **characterized** in that it comprises first means for decryption of a first number of bytes corresponding to a multiple of a decryption block, that it comprises second means for decryption a second decryption phase, wherein a multiple of the decryption block is formed by performing the decryption also both on bytes of a section shorter than the block length and on a desired number of bytes of the section already once decrypted.

## Patentansprüche

1. Verfahren zum Verschlüsseln eines digitale Video- oder digitale Audio- oder Dateninformationen enthaltenden Bitstroms, bei dem der Bitstrom gebildet wird, indem die einzelnen Informationen in erste (PES) Pakete geordnet werden, die einen ersten (PES) Kopfabschnitt und einen ersten Informationsabschnitt umfassen, der durch Informationsbytes gebildet wird, wobei zur Übertragung jedes (PES) Paket in zweite Transportstrom- (TS) Pakete einer festen Länge unterteilt wird, umfassend einen zweiten (TS) Kopfabschnitt und einen zweiten Informationsabschnitt, der durch eine feste erste Anzahl von Informationsbytes gebildet wird, wobei eine zweite, kleinere Anzahl von Bytes einen Verschlüsselungsblock bildet und jeder zweite Informationsabschnitt mehrere Verschlüsselungsblocks enthält, dadurch gekennzeichnet, daß
- bei der Verschlüsselung der (PES) Pakete ein erster Verschlüsselungsschlüssel in einem Verschlüsselungsalgorithmus auf Bit- oder Bytebasis verwendet wird, wobei die Verschlüsselung mit einer Genauigkeit von jeweils einem Bit oder einem Byte gleichzeitig erfolgt, und
- bei der Verschlüsselung von Transportstrom- (TS) Paketen ein zweiter Verschlüsselungsschlüssel in einem Verschlüsselungsalgorithmus auf Bytebasis verwendet wird, so daß die Verschlüsselung des zu verschlüsselnden Abschnittes blockweise erfolgt, und
- daß Informationen darüber, wie die (PES) Pakete und die Transportstrom- (TS) Pakete verschlüsselt werden, in dem Transportstrom- (TS) Paketkopfabschnitt enthalten sind, und
- daß der Transportstrom- (TS) Paketkopf nicht verschlüsselt ist.

2. Verfahren nach Anspruch 1, dadurch gekennzeichnet, daß die Blockverschlüsselung der Transportstrom- (TS) Pakete nur an dem Abschnitt des zu verschlüsselnden Paketes erfolgt, der eine Länge des Verschlüsselungsblockmehrfachen hat.

3. Verfahren nach Anspruch 1, dadurch gekennzeichnet, daß der Verschlüsselungsalgorithmus auf Blockbasis über den gesamten zu verschlüsselnden Abschnitt verwendet wird, so daß zuerst eine Anzahl von Bytes verschlüsselt wird, die einem Mehrfachen des verschlüsselungsblockes entspricht, und daß während einer zweiten verschlüsselungsphase ein Mehrfaches des verschlüsselungsblockes gebildet wird, indem die Verschlüsselung sowohl an Bytes eines Abschnittes, der kürzer ist als die Blocklänge, als auch an einer gewünschten Anzahl von Bytes des bereits einmal verschlüsselten Abschnittes durchgeführt wird.

4. Verfahren nach Anspruch 1, 2 oder 3, dadurch gekennzeichnet, daß der (PES) Paketverschlüsselungsalgorithmus die Länge des zu verschlüsselnden Abschnittes nicht begrenzt, sondern daß dieser jede gewünschte Länge mit einer Genauigkeit von einem Byte oder einem Bit haben kann.

5. Verfahren nach Anspruch 4, dadurch gekennzeichnet, daß der (PES) Paketverschlüsselungsalgorithmus ein PRBS-(Pseudozufalls-Bitsequenz) Algorithmus ist.

6. Verfahren nach den Ansprüchen 1 bis 5, dadurch gekennzeichnet, daß der (PES) Paketkopfabschnitt nicht verschlüsselt wird.

7. Verfahren nach den Ansprüchen 1 bis 6, dadurch gekennzeichnet, daß der erste und der zweite Verschlüsselungsschlüssel gleich sind.

8. Verfahren zum Entschlüsseln eines digitale Video- oder digitale Audio- oder Dateninformationen enthaltenden Bitstroms, bei dem der Bitstrom gebildet wird, indem die einzelnen Informationen in erste (PES) Pakete geordnet werden, die einen ersten (PES) Kopfabschnitt und einen ersten Informationsabschnitt umfassen, der durch Informationsbytes gebildet wird, wobei zur Übertragung jedes (PES) Paket in zweite Transportstrom- (TS) Pakete einer festen Länge unterteilt wird, umfassend einen zweiten (TS) Kopfabschnitt und einen zweiten Informationsabschnitt, der durch eine feste erste Anzahl von Informationsbytes gebildet wird, wobei eine zweite, kleinere Anzahl von Bytes einen Entschlüsselungsblock bildet und jeder zweite Informationsabschnitt mehrere Entschlüsselungsblocks enthält, dadurch gekennzeichnet, daß
- Informationen darüber, wie die (PES) Pakete und die Transportstrom- (TS) Pakete verschlüsselt werden, von dem Transportstrom- (TS) Paketkopfabschnitt gelesen werden, der nicht verschlüsselt ist,
- bei der Verschlüsselung von Transportstrom- (TS) Paketen ein erster Entschlüsselungsschlüssel in einem Verschlüsselungsalgorithmus auf Bytebasis verwendet wird, so daß die Entschlüsselung des zu entschlüsselnden Abschnittes blockweise erfolgt, und
- bei der Entschlüsselung der (PES) Pakete ein zweiter Entschlüsselungsschlüssel in einem Entschlüsselungsalgorithmus auf Bit- oder Bytebasis verwendet wird, wobei die Entschlüsselung mit einer Genauigkeit von jeweils einem Bit oder einem Byte gleichzeitig erfolgt.

9. Verfahren nach Anspruch 8, dadurch gekennzeichnet, daß, wenn anhand des Transportstrom- (TS) Kopfabschnittes identifiziert wird, daß der Verschlüsselungsalgorithmus auf Blockbasis über den gesamten zu entschlüsselnden Abschnitt verwendet wird, zuerst eine Anzahl von Bytes entschlüsselt wird, die einem Mehrfachen des Entschlüsselungsblockes entspricht, und daß während einer zweiten Entschlüsselungsphase ein Mehrfaches des Entschlüsselungsblockes gebildet wird, indem die Entschlüsselung sowohl an Bytes eines Abschnittes, der kürzer ist als die Blocklänge, als auch an einer gewünschten Anzahl von Bytes des bereits einmal entschlüsselten Abschnittes durchgeführt wird.

10. Vorrichtung zum Verschlüsseln eines digitale Video- oder digitale Audio- oder Dateninformationen enthaltenden Bitstroms, umfassend ein Mittel zum Bilden des Bitstroms, indem die einzelnen Informationen in erste (PES) Pakete geordnet werden, die einen ersten (PES) Kopfabschnitt und einen ersten Informationsabschnitt umfassen, der durch Informationsbytes gebildet wird, ein Mittel zum Unterteilen jedes (PES) Pakets zur Übertragung in zweite Transportstrom- (TS) Pakete einer festen Länge, umfassend einen zweiten (TS) Kopfabschnitt und einen zweiten Informationsabschnitt, der durch eine feste erste Anzahl von Informationsbytes gebildet wird, wobei eine zweite, kleinere Anzahl von Bytes einen Verschlüsselungsblock bildet und jeder zweite Informationsabschnitt mehrere verschlüsselungsblocks enthält, dadurch gekennzeichnet, daß sie ferner folgendes umfaßt:
- ein Mittel zur Verschlüsselung der (PES) Pakete mit einem ersten Verschlüsselungsschlüssel in einem Verschlüsselungsalgorithmus auf Bit- oder Bytebasis, wobei die Verschlüsselung mit einer Genauigkeit von jeweils einem Bit oder einem Byte gleichzeitig erfolgt, und
- ein Mittel zur Verschlüsselung von Transportstrom-(TS) Paketen mit einem zweiten verschlüsselungsschlüssel in einem Verschlüsselungsalgorithmus auf Bytebasis, so daß die Verschlüsselung des zu verschlüsselnden Abschnittes blockweise erfolgt, und
- ein Mittel zum Bereitstellen von Informationen darüber, wie die (PES) Pakete und die Transportstrom- (TS) Pakete verschlüsselt werden, die in den Transportstrom-(TS) Paketkopfabschnitt einbezogen werden sollen.

11. Vorrichtung zum Entschlüsseln eines digitale Video- oder digitale Audio- oder Dateninformationen enthaltenden Bitstroms, bei dem der Bitstrom gebildet wird, indem die einzelnen Informationen in erste (PES) Pakete geordnet werden, die einen ersten (PES) Kopfabschnitt und einen ersten Informationsabschnitt umfassen, der durch Informationsbytes gebildet wird, wobei zur Übertragung jedes (PES) Paket in zweite Transportstrom- (TS) Pakete einer festen Länge unterteilt wird, umfassend einen zweiten (TS) Kopfabschnitt und einen zweiten Informationsabschnitt, der durch eine feste erste Anzahl von Informationsbytes gebildet wird, wobei eine zweite, kleinere Anzahl von Bytes einen Entschlüsselungsblock bildet und jeder zweite Informationsabschnitt mehrere Entschlüsselungsblocks enthält, dadurch gekennzeichnet, daß sie folgendes umfaßt:
- ein Mittel zum Lesen von Informationen darüber, wie die (PES) Pakete und die Transportstrom- (TS) Pakete verschlüsselt werden, von dem Transportstrom- (TS) Paketkopfabschnitt,
- ein Mittel zum Entschlüsseln von Transportstrom-(TS) Paketen mit Hilfe eines ersten Entschlüsselungsschlüssels in einem Verschlüsselungsalgorithmus auf Bytebasis, so daß die Entschlüsselung des zu entschlüsselnden Abschnittes blockweise erfolgt, und
- ein Mittel zum Entschlüsseln der (PES) Pakete mit Hilfe eines zweiten Entschlüsselungsschlüssels in einem Entschlüsselungsalgorithmus auf Bit- oder Bytebasis, wobei die Entschlüsselung mit einer Genauigkeit von jeweils einem Bit oder einem Byte gleichzeitig erfolgt.

12. Vorrichtung nach Anspruch 11, dadurch gekennzeichnet, daß es ein erstes Mittel zum Entschlüsseln einer ersten Anzahl von Bytes entschlüsselt wird, die einem Mehrfachen eines Entschlüsselungsblockes entspricht, und daß sie ein zweites Mittel zum Entschlüsseln einer zweiten Entschlüsselungsphase umfaßt, in der ein Mehrfaches des Entschlüsselungsblockes gebildet wird, indem die Entschlüsselung sowohl an Bytes eines Abschnittes, der kürzer ist als die Blocklänge, als auch an einer gewünschten Anzahl von Bytes des bereits einmal entschlüsselten Abschnittes durchgeführt wird.

## Revendications

1. Procédé pour crypter un flux de bits contenant des informations vidéo numériques ou des informations audio numériques ou des informations de données, le flux de bits étant formé en disposant chaque information dans des premiers paquets (PES) comprenant un premier en-tête (PES) et une première section d'informations formée d'octets d'information, chaque paquet (PES), en vue d'une transmission, étant divisé en des seconds paquets de flux de transport (TS) de longueur fixée, comprenant un second en-tête (TS) et une seconde section d'informations formée d'un premier nombre fixé d'octets d'informations, un second nombre plus petit d'octets formant un bloc de cryptage et chaque seconde section d'informations contenant plusieurs blocs de cryptage, caractérisé en ce que
- lors du cryptage des paquets (PES), une première clé de cryptage est utilisée dans un algorithme de cryptage basé sur les bits ou les octets, le cryptage étant effectué avec une précision de un bit ou un octet à la fois, et
- lors du cryptage de paquets de flux de transport (TS), une seconde clé de cryptage est utilisée dans un algorithme de cryptage basé sur les octets, le cryptage de la section à crypter étant effectué par blocs et,
- des informations relatives à la manière dont les paquets (PES) et les paquets de flux de transport (TS) sont cryptés sont incluses dans l'en-tête des paquets de flux de transport (TS), et
- l'en-tête d'un paquet de flux de transport (TS) n'est pas crypté.

2. Procédé selon la revendication 1, caractérisé en ce que le cryptage par blocs des paquets de flux de transport (TS) est effectué uniquement sur la section du paquet à crypter qui possède une longueur multiple de celle d'un bloc de cryptage.

3. Procédé selon la revendication 1, caractérisé en ce que l'algorithme de cryptage basé sur les blocs est utilisé sur toute la section à crypter, de sorte que, tout d'abord, un premier nombre d'octets correspondant à un multiple du bloc de cryptage est crypté, et en ce que, durant une seconde phase de cryptage, un multiple du bloc de cryptage est formé en effectuant le cryptage aussi à la fois sur les octets d'une section de longueur plus petite que la longueur de bloc et sur un nombre souhaité d'octets de la section déjà cryptée une première fois.

4. Procédé selon la revendication 1, 2 ou 3, caractérisé en ce que l'algorithme de cryptage des paquets (PES) ne limite pas la longueur de la section à crypter, mais celle-ci peut être de n'importe quelle longueur avec une précision de un octet ou un bit.

5. Procédé selon la revendication 4, caractérisé en ce que l'algorithme de cryptage des paquets (PES) est un algorithme PRBS (Pseudo Random Bit Sequence).

6. Procédé selon les revendications 1 à 5, caractérisé en ce que l'en-tête de paquet (PES) n'est pas crypté.

7. Procédé selon les revendications 1 à 6, caractérisé en ce que les première et seconde clés de cryptage sont identiques.

8. Procédé pour décrypter un flux de bits contenant des informations vidéo numériques ou des informations audio numériques ou des informations de données, le flux de bits étant formé en disposant chaque information dans des premiers paquets (PES) comprenant un premier en-tête (PES) et une première section d'informations formée d'octets d'informations, chaque paquet (PES), en vue d'une transmission, étant divisé en des seconds paquets de flux de transport (TS) de longueur fixée, comprenant un second en-tête (TS) et une seconde section d'informations formée d'un premier nombre fixé d'octets d'informations, un second nombre plus petit d'octets formant un bloc de décryptage et chaque seconde section d'informations contenant plusieurs blocs de décryptage, caractérisé en ce que
- des informations relatives à la manière dont les paquets (PES) et les paquets de flux de transport (TS) sont cryptés sont lues à partir de l'en-tête de paquet de flux de transport (TS), lequel n'est pas crypté,
- lors du décryptage des paquets de flux de transport (TS), une première clé de décryptage est utilisée dans un algorithme de cryptage basé sur les octets, le décryptage de la section à décrypter étant effectué par blocs, et
- lors du décryptage des paquets (PES), une seconde clé de décryptage est utilisée dans un algorithme de décryptage basé sur les bits ou les octets, le décryptage étant effectué avec une précision de un bit ou un octet à la fois.

9. Procédé selon la revendication 8, caractérisé en ce que, lorsqu'il est identifié, à partir de l'en-tête de flux de transport (TS), que l'algorithme de cryptage basé sur les blocs est utilisé sur toute la section à décrypter, tout d'abord, un nombre d'octets correspondant à un multiple du bloc de décryptage est décrypté, et, durant une seconde phase de décryptage, un multiple du bloc de décryptage est formé en effectuant le décryptage aussi à la fois sur les octets d'une section de longueur plus petite que la longueur de bloc et sur un nombre souhaité d'octets de la section déjà une fois décryptée.

10. Dispositif pour crypter un flux de bits contenant des informations vidéo numériques ou des informations audio numériques ou des informations de données, comprenant des moyens pour former le flux de bits en disposant chaque information dans des premiers paquets (PES) comprenant un premier en-tête (PES) et une première section d'informations formée d'octets d'informations, des moyens pour découper chaque paquet (PES), en vue d'une transmission, en des seconds paquets de flux de transport (TS) de longueur fixée, comprenant un second en-tête (TS) et une seconde section d'informations formée d'un premier nombre fixé d'octets d'informations, un second nombre plus petit d'octets formant un bloc de cryptage et chaque seconde section d'informations contenant plusieurs blocs de cryptage, caractérisé en ce qu'il comporte en outre
- des moyens pour crypter les paquets (PES) en utilisant une première clé de cryptage dans un algorithme de cryptage basé sur les bits ou les octets, le cryptage étant effectué avec une précision de un bit ou un octet à la fois, et
- des moyens pour crypter les paquets de flux de transport (TS) en utilisant une seconde clé de cryptage dans un algorithme de cryptage basé sur les octets, le cryptage de la section à crypter étant effectué par blocs et,
- des moyens pour fournir des informations relatives à la manière dont les paquets (PES) et les paquets de flux de transport (TS) sont cryptés, à incorporer dans l'en-tête de paquet de flux de transport (TS).

11. Dispositif pour décrypter un flux de bits contenant des informations vidéo numériques ou des informations audio numériques ou des informations de données, le flux de bits étant formé en disposant chaque information dans des premiers paquets (PES) comprenant un premier en-tête (PES) et une première section d'informations formée d'octets d'informations, chaque paquet (PES), en vue d'une transmission, étant divisé en des seconds paquets de flux de transport (TS) de longueur fixée, comprenant un second en-tête (TS) et une seconde section d'informations formée d'un premier nombre fixé d'octets d'informations, un second nombre plus petit d'octets formant un bloc de décryptage et chaque seconde section d'informations contenant plusieurs blocs de décryptage, caractérisé en ce qu'il comporte
- des moyens pour lire à partir de l'en-tête de paquet de flux de transport (TS) des informations relatives à la manière dont les paquets (PES) et les paquets de flux de transport (TS) sont cryptés,
- des moyens pour décrypter les paquets de flux de transport (TS) en utilisant une première clé de décryptage dans un algorithme de cryptage basé sur les octets, le décryptage de la section à décrypter étant effectué par blocs, et
- des moyens pour décrypter les paquets (PES) en utilisant une seconde clé de décryptage dans un algorithme de décryptage basé sur les bits ou les octets, le décryptage étant effectué avec une précision de un bit ou un octet à la fois.

12. Dispositif selon la revendication 11, caractérisé en ce qu'il comporte des premiers moyens pour décrypter un premier nombre d'octets correspondant à un multiple d'un bloc de décryptage, en ce qu'il comporte des seconds moyens de décryptage pour une seconde phase de décryptage, un multiple du bloc de décryptage étant formé en effectuant le décryptage aussi à la fois sur les octets d'une section de longueur plus petite que la longueur de bloc et sur un nombre souhaité d'octets de la section déjà une fois décryptée.
